# EUROPÄISCHE PATENTANMELDUNG

(11) **EP 1 686 240 A1**
(43) Veröffentlichungstag der Anmeldung: **02.08.2006**
(21) Anmeldenummer: 05001712.8
(22) Anmeldetag: 27.01.2005
(51) Int. Cl.: F01D 5/18, F23R 3/00

(54) **Bauteil mit Abflachung in einem Loch**

(71) Anmelder: SIEMENS AKTIENGESELLSCHAFT, 80333 München (DE)
(72) Erfinder: Bostanjoglo, Georg, Dr., 12161 Berlin (DE)

(57) **Zusammenfassung**

Bauteile nach dem Stand der Technik mit einer spitzen Kante im Bereich einer Austrittsöffnung eines Lochs weisen bei einer Beschichtung oft Risse in diesem Bereich auf.

Die erfindungsgemäße Ausgestaltung des Lochs (4) mittels einer Abflachung (11) im Bereich der äußeren Oberfläche (5) ermöglicht es, dass dieser spitze und dünne Bereich (8) nicht abbricht oder dass sich dort bei einer vorhandenen Beschichtung keine Risse bilden.

## Beschreibung

Die Erfindung betrifft ein Bauteil mit einer Abflachung in einem Loch gemäß Oberbegriff des Anspruchs 1.

Bauteile von Turbinen, wie z.B. Turbinenschaufeln oder Hitzeschildelemente weisen Löcher auf, durch die ein Kühlluftgas oder ein Brenngas strömt. Dabei wird auf die Oberfläche des Bauteils oft eine Beschichtung aufgetragen, die manchmal während des Einsatzes um das Loch herum Risse bildet.

Die US 5,941,686 zeigt eine Kühlluftbohrung, bei der in dem Loch um die ganze Umfangslinie in der Ebene der äußeren Oberfläche Material wegen des "Coat-down" Effekts abgetragen wurde, bzw. den Nachteil des Standes der Technik, der mit der Erfindung überwunden werden soll, nämlich dass eine Beschichtung im Bereich der Auslassöffnung des Lochs keine Risse mehr bildet.

Die Aufgabe wird gelöst durch ein Bauteil gemäß Anspruch 1. In den Unteransprüchen sind weitere vorteilhafte Maßnahmen aufgelistet, die beliebig in vorteilhafter Art und Weise miteinander kombiniert werden können.

Es zeigen
- Figur 1: ein Durchgangsloch nach dem Stand der Technik,
- Figur 2 - 11: Ausführungsbeispiele der Erfindung,
- Figur 12: eine Turbinenschaufel,
- Figur 13: eine Brennkammer und
- Figur 14: eine Gasturbine.

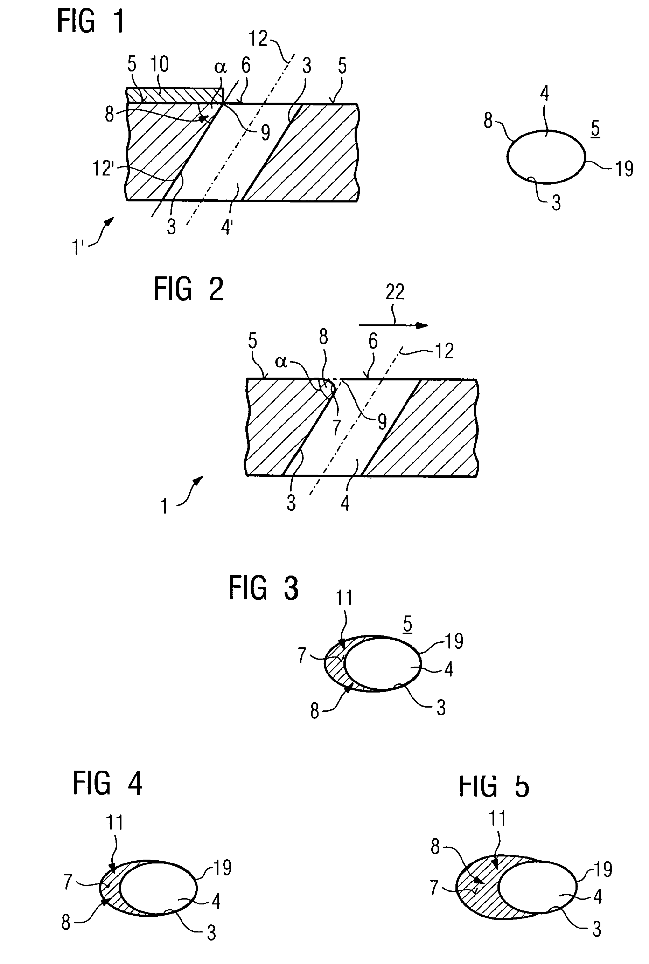

Figur 1 zeigt ein Bauteil 1' mit einem Loch 4' nach dem Stand der Technik.
Ein solches Loch 4' ist auch in der US-PS 5,941,686 in Figur 4 gezeigt.

Das Loch 4', beispielsweise ein Sack- oder ein Durchgangsloch, weist eine innere Oberfläche 3 mit einer Austrittsöffnung 6 und einen Umfang 19 in der Ebene der äußeren Oberfläche 5 des Bauteils 1' auf. Auf die äußere Oberfläche 5 wird eine Beschichtung 10 aufgebracht, wie es auch in Figur 4 der US-PS 5,941,686 gezeigt ist.

Das Loch 4' weist eine Längsachse 12 auf, die beispielsweise für zumindest ein Teil des Lochs 4' die Symmetrielinie bildet.

Ein Winkel α wird definiert durch die Ebene der Oberfläche 5 und eine Linie 12', die parallel zur Längsachse 12 und im Bereich der inneren Oberfläche 3 verläuft.

Bei einem Turbinenbauelement wie einer Turbinenschaufel dient das Loch 4' als Durchgangsloch gestaltete Kühlmittellochs zur Filmkühlung und verläuft mit seiner Längsachse 12 unter einem spitzen Winkel α zur Oberfläche 5, wobei in einem Bereich 8 eine spitze Kante 9 entsteht.
Der Winkel α ist ein spitzer Winkel, d.h. er weist Werte > 0° und < 90° auf, sodass das Loch 4' eine spitze Kante 9 im Bereich der Austrittsöffnung 6 aufweist.

Erfindungsgemäß ist die spitze Kante 9 oder der Bereich 8 gebrochen, sodass jetzt beispielsweise eine abgerundete Kante 7 vorhanden ist (Fig. 2).
Gestrichelt angedeutet ist in Figur 2 wiederum die ehemals vorhandene spitze Kante.

Die Draufsicht auf das Loch 4 in Figur 2 hat sich dem gemäß gegenüber Figur 1 in der Art und Weise verändert, dass das Loch 4 als Durchgangsloch an der Oberfläche 5 verbreitert erscheint (Fig. 3).
In Figur 3 ist der Bereich 8 schraffiert angedeutet. In diesem Ausführungsbeispiel umfasst eine Abflachung 11 den gesamten Bereich 8, der sich hier insbesondere zur Hälfte um das Loch 4 erstreckt.

Die Wegnahme von Material erfolgt aber nicht um den gesamten Umfang 19 des Lochs 4, sondern nur zu einem Teil, insbesondere um die Hälfte des Umfangs 19 oder insbesondere um den gesamten Bereich 8, in dem ursprünglich eine spitze Kante vorlag.

Über die Oberfläche 5 strömt beispielsweise ein Gas, bspw. ein Heißgas, in Strömungsrichtung 22, wobei die Abflachung 11 in Strömungsrichtung 22 gesehen vorzugsweise in dem Bereich erfolgt, bezogen auf die Strömung des Gases der am vordersten ist.

Figur 4 zeigt ein weiteres Ausführungsbeispiel des erfindungsgemäßen Bauteils 1.

Gestrichelt angedeutet ist die nicht mehr vorhandene spitze Kante, wobei die Abflachung 11 nicht den gesamten Bereich 8 umfasst, sondern nur einen Teil davon.

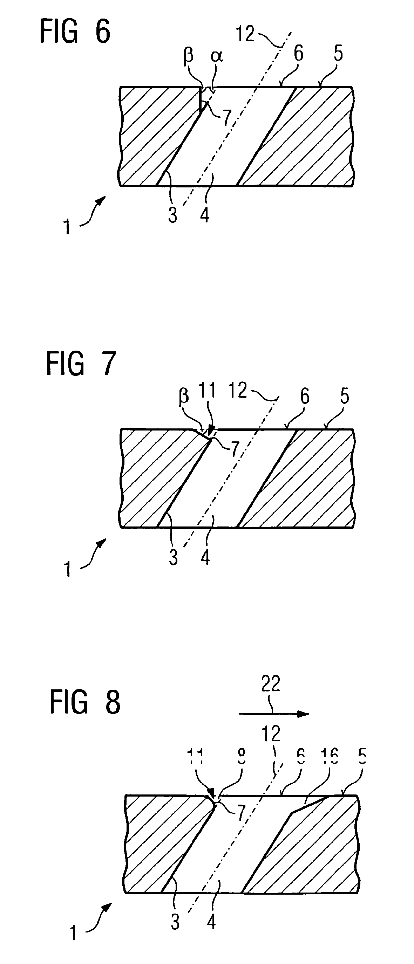

Hingegen ist in Figur 5 die Abflachung in Umfangsrichtung größer ausgebildet als der Bereich 8, jedoch umfasst die Abflachung nicht den gesamten Umfang 19 des Lochs 4.

Figur 6, 7 zeigen weitere Ausführungsbeispiele des erfindungsgemäßen Bauteils 1, bei dem die Kante 9 angefasst (im Längsschnitt linearer Verlauf) wurde, sodass ein Winkel β zwischen größer 0° (Fig. 7) und 90° (Fig. 6) zwischen der Oberfläche 5 und dem Loch 4 im Bereich der Ausgangsöffnung 6 gegeben ist.

Das Loch 4 unterhalb der Abflachung 11 ist bspw. symmetrisch ausgeführt. Der Querschnitt des Lochs 4 kann im Querschnitt senkrecht zu seiner Symmetrielinie (Längsachse/Mittellinie) rechteckig, rund oder oval sein.
Außerdem kann das Loch 4 im Bereich der Ausgangsöffnung 6 verbreitert sein und bildet einen so genannten Diffusorbereich 16 (Fig. 8). Auch hier ist die spitze Kante 9 des Lochs 4 abgeflacht. Der Diffusorbereich 16 ist in Strömungsrichtung 22 gesehen hinter der Abflachung 11 angeordnet.

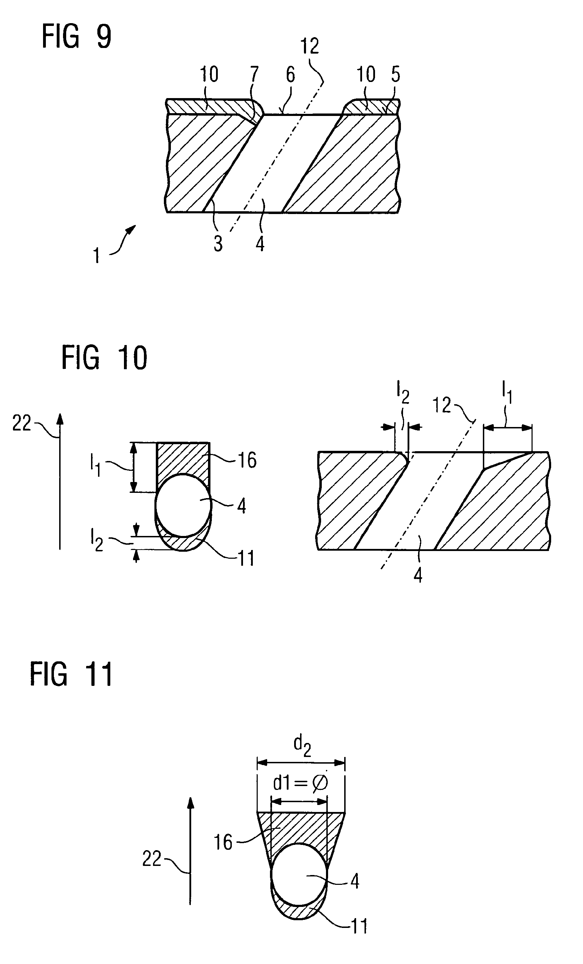

Figur 10 zeigt eine Draufsicht auf ein Loch 4 und einen Querschnitt eines Lochs 4 mit der Abflachung 11 und dem Diffusor 16.

In Strömungsrichtung 22 gesehen ist die Ausdehnung l₂ der Abflachung 11 kleiner ausgebildet als die Ausdehnung des Diffusors 16 in Strömungsrichtung 22, die mit l₁ gekennzeichnet ist. Die Länge l₁ beträgt beispielsweise etwa 3mm.

Der Durchmesser 0 des Lochs 4 beträgt beispielsweise etwa 0,7mm bei Laufschaufeln und etwa 0,8mm bei Leitschaufeln.

Die Ausdehnung l₂ der Abflachung entspricht maximal dem Durchmesser Ø des Lochs 4 und ist vorzugsweise kleiner als der Durchmesser Ø des Lochs 4, wohingegen die Ausdehnung l₁ mindestens genau so groß ist wie der Durchmesser 0 des Lochs 4 und insbesondere ein Vielfaches davon beträgt. Das Verhältnis l_{1/}l₂ ist also größer 1 und ist vorzugsweise ≥ 2.

Da der Diffusor 16 quasi auch als Abflachung betrachtet werden kann, liegt hier aber eine unsymmetrische Verteilung der Ausdehnung der Abflachungen in Strömungsrichtung 22 vor, nämlich in Strömungsrichtung 22 gesehen ist die Ausdehnung der Abflachung 11, die zuerst von dem Medium überströmt wird, kleiner als die "Abflachung" 16, die in Strömungsrichtung 22 gesehen später überströmt wird.

Insbesondere ist der Diffusor 16 am Ende senkrecht zur Strömungsrichtung 22 breiter ausgebildet als der Durchmesser d1 = Ø des Lochs 4 (Fig. 11).

Die Breite d₂ des Diffusors 16 hat einen maximalen Wert von 2 +/- 0,2mm bei Laufschaufeln und eine Breite d₂ von 4 +/-0,2mm für Leitschaufeln.

Figur 9 zeigt ein erfindungsgemäßes Bauteil 1 mit einer Beschichtung 10.

Die Beschichtung 10 kann in die Abflachung 11 des Lochs 4 hineinragen oder auch nicht. Durch diese Anordnung wird die Rissbildung in der Beschichtung 10 vermieden.
Die Beschichtung 10 kann eine Korrosionsschutzschicht insbesondere des Typs MCrAlX sein, wobei gegebenenfalls noch eine keramische Wärmedämmschicht vorhanden ist.

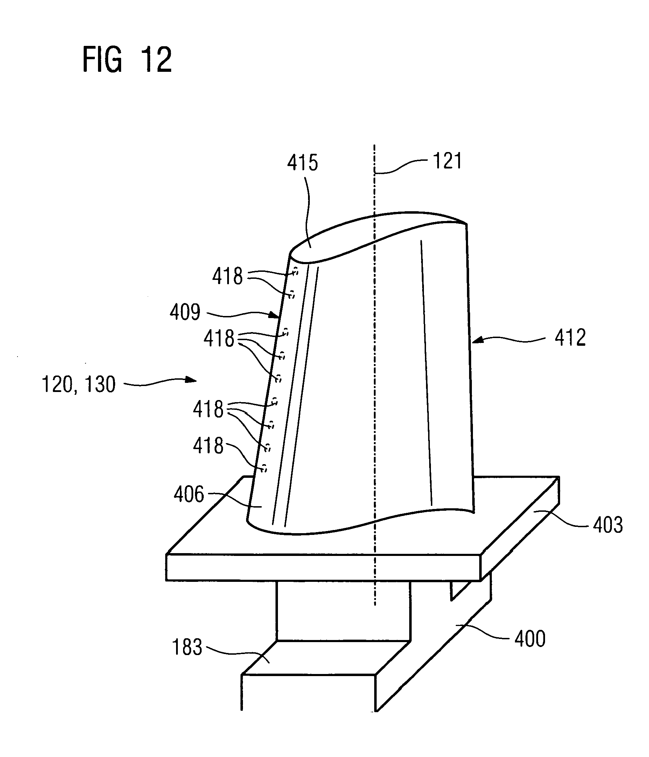

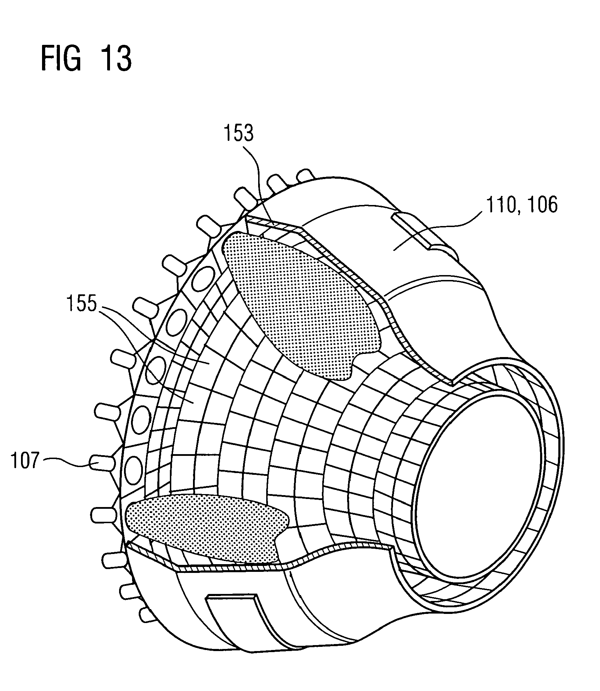

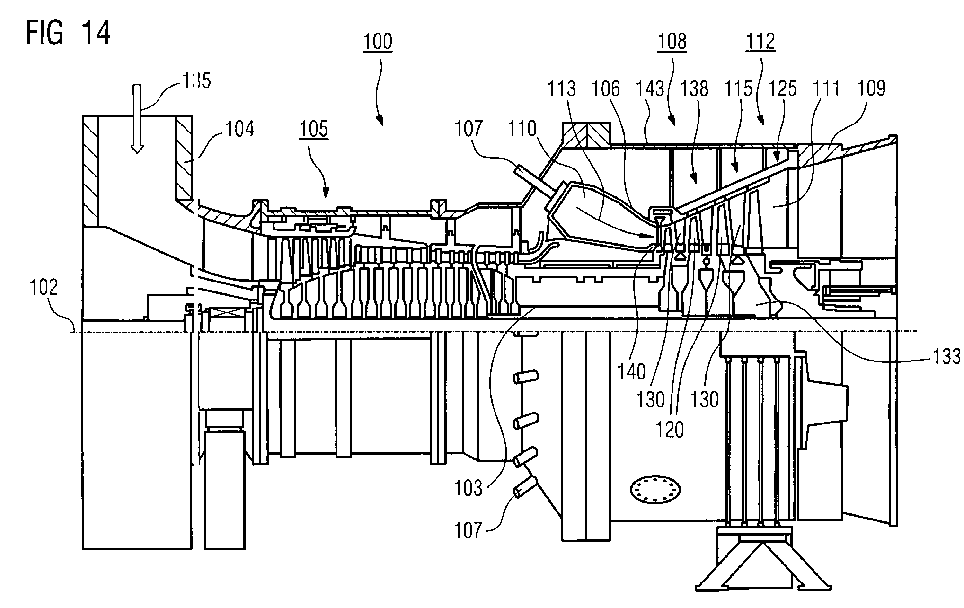

Das Bauteil 1 ist insbesondere ein Bauteil einer Turbine wie z.B. einer Gasturbine 100 (Fig. 14) für ein Kraftwerk oder eine Flugzeugturbine bzw. einer Dampfturbine. Dabei weisen insbesondere die Schaufeln 120, 130 (Fig. 12) oder die Hitzeschildelemente 155 insbesondere für Brennkammern 110 (Fig. 13) solche Löcher 7 (Durchgangslöcher) für Filmkühllöcher oder Brenngasöffnungen auf.

Figur 12 zeigt in perspektivischer Ansicht eine Laufschaufel 120 oder Leitschaufel 130 einer Strömungsmaschine 100 (Fig. 12), die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.
Als Leitschaufel 130 kann die Schaufel 130 an ihrer Schaufelspitze 415 eine weitere Plattform aufweisen (nicht dargestellt) .

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind Teil der Offenbarung.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrA1X kann noch eine Wärmedämmschicht vorhanden sein und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (Löcher 4, gestrichelt angedeutet) auf.

Die Figur 13 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um die Rotationsachse 102 herum angeordneten Brennern 107 in einen gemeinsamen Brennkammerraum münden. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 ist arbeitsmediumsseitig mit einer besonders hitzebeständigen Schutzschicht ausgestattet oder aus hochtemperaturbeständigem Material gefertigt. Dies können massive keramische Steine oder Legierungen mit MCrAlX und/oder keramischen Beschichtungen sein.
Die Materialien der Brennkammerwand und deren Beschichtungen können ähnlich der Turbinenschaufeln sein.

Aufgrund der hohen Temperaturen im Inneren der Brennkammer 110 kann zudem für die Hitzeschildelemente 155 bzw. für deren Halteelemente ein Kühlsystem vorgesehen sein.

Die Brennkammer 110 ist insbesondere für eine Detektion von Verlusten der Hitzeschildelemente 155 ausgelegt. Dazu sind zwischen der Brennkammerwand 153 und den Hitzeschildelementen 155 eine Anzahl von Temperatursensoren 158 positioniert.

Die Figur 14 zeigt beispielhaft eine Gasturbine 100 in einem Längsteilschnitt.

Die Gasturbine 100 weist im Inneren einen um eine Rotationsachse 102 drehgelagerten Rotor 103 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.
Die Ringbrennkammer 106 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind Teil der Offenbarung.

Ebenso können die Schaufeln 120, 130 Beschichtungen gegen Korrosion (MCrA1X; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein, und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Bauteil (1),
das eine Oberfläche (5) mit einem Loch (4) aufweist, wobei das Loch (4) einen Umfang (19) auf der Oberfläche (5) aufweist,
wobei ein Bereich (8) mit einer spitzen Kante (9) in der Ebene der Oberfläche (5) vorhanden ist,
**dadurch gekennzeichnet, dass**
die spitze Kante (9) stellenweise entlang des Umfangs (19) zumindest in dem Bereich (8) gebrochen ist,
sodass dort eine Abflachung (11) vorhanden ist.

2. Bauteil nach Anspruch 1,
**dadurch gekennzeichnet,**
**dass** das Loch (4) in einer Strömungsrichtung (22) von einem Medium überströmt wird, und
**dass** die Abflachung (11) des Lochs (4) in Strömungsrichtung (22) gesehen im vorderen Teil des Lochs (4) vorhanden ist.

3. Bauteil nach Anspruch 1 oder 2,
**dadurch gekennzeichnet,**
**dass** die Abflachung (11) des Lochs (4) sich hälftig um das Loch (4) erstreckt.

4. Bauteil nach Anspruch 1
**dadurch gekennzeichnet, dass**
der ganze Bereich (8) um das Loch (4) gebrochen ist.

5. Bauteil nach Anspruch 1, 2, 3 oder 4,
**dadurch gekennzeichnet, dass**
die Abflachung (11) als Rundung ausgeführt ist.

6. Bauteil nach Anspruch 1, 2, 3 oder 4,
**dadurch gekennzeichnet, dass**
die Abflachung (11) eine Fase ist.

7. Bauteil nach Anspruch 1,
**dadurch gekennzeichnet,**
**dass** das Loch (4) ein Durchgangsloch ist, und
**dass** das Loch (4) im Bereich einer Austrittsöffnung (6) einen Diffusorbereich (16) aufweist.

8. Bauteil nach Anspruch 7,
**dadurch gekennzeichnet,**
**dass** der Diffusor (16) in Strömungsrichtung (22) länger ausgenliaet ist als die Abflachung (11).

9. Bauteil nach Anspruch 7,
**dadurch gekennzeichnet,**
**dass** die Ausdehnung (l₂) der Abflachung (11) in Strömungsrichtung (22) maximal dem Durchmessers (0) des Lochs (4) entspricht.

10. Bauteil nach Anspruch 9,
**dadurch gekennzeichnet**,
die Ausdehnung (l₂) der Abflachung (11) in Strömungsrichtung (l₂) kleiner ist als der Durchmesser (Ø) des Lochs (4).

11. Bauteil nach Anspruch 7 oder 8,
**dadurch gekennzeichnet,**
**dass** die Ausdehnung (l₁) des Diffusors (16) in Strömungsrichtung (22) zumindest dem Durchmesser (0) des Lochs (4) entspricht,
insbesondere ein Vielfaches des Durchmessers (0) des Lochs (4) beträgt.

12. Bauteil nach Anspruch 7, 8, 9, 10 oder 11,
**dadurch gekennzeichnet,**
**dass** der Diffusor (16) senkrecht zur Strömungsrichtung (22) breiter (d₂)ausgebildet ist als der Durchmesser (Ø) des Lochs (4).

13. Bauteil nach Anspruch 1 oder 7,
**dadurch gekennzeichnet, dass**
zumindest eine Beschichtung (10) auf der Oberfläche (5) um das Loch (4) vorhanden ist,
insbesondere eine Korrosionsschutzschicht und insbesondere mit einer keramischen Wärmedämmschicht.

14. Bauteil nach Anspruch 1, 7 oder 13,
**dadurch gekennzeichnet,**
**dass** das Bauteil (1) ein neu hergestelltes oder wieder aufgearbeitetes Bauteil einer Turbine,
insbesondere einer Dampf- oder Gasturbine (100) ist und insbesondere eine Turbinenschaufel (120, 130) oder ein Hitzeschildelement (155) ist.
